# EUROPÄISCHE PATENTANMELDUNG

(11) **EP 0 779 589 A2**
(43) Veröffentlichungstag der Anmeldung: **18.06.1997**
(21) Anmeldenummer: 96119148.3
(22) Anmeldetag: 29.11.1996
(51) Int. Cl.: G06K 7/08

(54) **Lese-/Schreibvorrichtung für ein Datenträgerelement**

(30) Priorität: 12.12.1995 DE 29519669 U; 26.08.1996 DE 29614776 U
(71) Anmelder: Sokymat Identifikations Komponenten GmbH, 51429 Bergisch Gladbach (DE)
(72) Erfinder: Spreng, Markus, D-51588 Nümbrecht (DE); Thyssen, Herbert, CH-1618 Châtel-St.-Denis (CH)
(74) Vertreter: Cohausz & Florack

(57) **Zusammenfassung**

Die Erfindung betrifft ein Datenträgerelement, insbesondere zur Verwendung nach Art einer Wertkarte, wie Telefonkarte, Fahrkarte, Skipass u. dgl., bestehend aus einem an oder in einem Trägerteil (T) angeordneten, kontaktlos lesbaren und beschreibbaren Datenträger, welcher ein Mikrochip (IC) und eine Antenne (A) enthält. Der Erfindung liegt die Aufgabe zu Grunde, ein Datenträgerelement (T) bzw. eine Lese-/Schreibvorrichtung (4,5) für ein Datenträgerelement dahingehend weiterzuentwickeln, daß dem Inhaber und Benutzer des Datenträgerelementes die Möglichkeit geboten wird, die im Datenträger abgespeicherte Dateninformation jederzeit visuell aufzunehmen. Dies erfolgt dadurch daß, das Datenträgerelement (T) mit einem im Datenträger abgespeicherte Daten visuell wiedergebenden, von einem durch eine Lese-/Schreibvorrichtung (4,5) beschreibbaren und wiederholt löschbaren Beschriftungsfeld (B) versehen ist.

## Beschreibung

Die Erfindung berifft ein Datenträgerelement, insbesondere zur Verwendung nach Art einer Wertkarte, wie Telefonkarte, Fahrkarte, Skipass u. dgl., bestehend aus einem an oder in einem Trägerteil angeordneten, kontaktlos lesbaren und beschreibbaren Datenträger, welcher ein Mikrochip und eine Antenne enthält, sowie eine Lese-/Schreibvorrichtung für ein solches Datenträgerelement, bestehend aus einem Gehäuse mit einem Führungspfad für das Datenträgerelement und einem entlang des Führungspfads angeordneten Lesegerät zum kontaktlosen Auslesen der abgespeicherten Information.

Datenträgerelemente in Form von Kreditkarten und Wertkarten, wie z.B. Telefonkarten, sind in zahlreichen Gestaltungsformen bekannt und gebräuchlich. Sie bestehen zumeist aus dünnen Kunststoffkarten, in die der aus einem Mikrochip und einer Antenne bestehende elektronische Datenträger (Transponder) eingebettet ist. Daneben ist es aber auch bekannt, als Datenträger einen an der Kunststoffkarte angeordneten Magnetstreifen vorzusehen. Das Auslesen der vom Datenträger abgespeicherten Daten erfolgt kontaktlos mit Hilfe von Lesegeräten, in die die Datenkarten eingeführt werden. Dabei können die Lesegeräte auch so ausgeführt sein, daß sie die ausgelesenen Daten dem Kartenbenutzer auf einem Display optisch anzeigen.

Bei Wertkarten, wie z.B. Telefonkarten, die zu einem bestimmten Kaufpreis als Entgelt für bestimmte Leistungen, wie z.B. eine bestimmte Anzahl an Telefongesprächen bzw. Telefon-Gebühreneinheiten, erworben werden, wird dem Kartenbenutzer das jeweils noch verbliebene Guthaben im Display nur dann angezeigt, wenn die Karte in das Lesegerät eingegeben wird. Hierbei werden die in dem Datenträger (z.B. Mikrochip) abgespeicherten Daten nach dem Prinzip der kontaktlosen Datenübertragung oder durch Kontaktierung des Mikrochips bzw. des Magnetstreifens abgerufen und im Display visuell angezeigt. Die im Datenträger bzw. im Mikrochip jeweils abgespeicherten Daten sind jedoch ohne Einführen der Wertkarten in das Lesegerät für den Kartenbenutzer nicht erkennbar. Beispielsweise kann der Benutzer einer Telefonkarte ohne Lesegerät mit zugeordnetem Display nicht feststellen, über welches Restguthaben er noch verfügt und ob dieses ausreicht, um noch weitere Leistungen in Anspruch zu nehmen.

Der Erfindung liegt die Aufgabe zu Grunde, ein Datenträgerelement bzw. eine Lese-/Schreibvorrichtung für ein Datenträgerelement dahingehend weiterzuentwickeln, daß dem Inhaber und Benutzer des Datenträgerelementes die Möglichkeit geboten wird, die im Datenträger abgespeicherte Dateninformation jederzeit visuell aufzunehmen.

Diese Aufgabe wird erfindungsgemäß dadurch gelöst, daß das Datenträgerelement mit einem im Datenträger abgespeicherte Daten visuell wiedergebenden, von einem durch eine Lese-/Schreibvorrichtung beschreibbaren und wiederholt löschbaren Beschriftungsfeld versehen ist. Für eine Lese-/Schreibvorrichtung der genannten Art wird diese Aufgabe dadurch gelöst, daß entlang des Führungspfads eine mit dem Lesegerät gekoppelte Schreibeinheit vorgesehen ist, mittels der aus dem Datenträger ausgelesene Informationen auf einem dem Datenträgerelement zugeordneten Beschriftungsfeld visuell wiedergebbar sind.

Nach der Erfindung weist also das mit dem Datenträger, nämlich dem Mirkrochip mit Antenne (Transponder) versehene Datenträgerelement ein Beschriftungsfeld auf, auf dem die vom Datenträger abgespeicherten Daten durch Beschriftung sichtbar gemacht werden, wenn die gespeicherten Daten vom Lesegerät ausgelesen bzw. abgerufen werden. Dabei werden die abgespeicherten Daten von einem geeigneten Drucker, der von dem Lesegerät gesteuert wird, auf das Beschriftungsfeld des Datenträgerelementes geschrieben. Sie stehen daher auch dann zur Verfügung, wenn das Datentgrägerelement dem Lesegerät entnommen und bis zu seiner nächsten Benutzung vom Inhaber mitgeführt wird. Damit hat der Benutzer des Datenträgerelementes die Möglichkeit, die jeweils in dem Datenträger abgespeicherten Daten jederzeit visuell vom Beschriftungsfeld des Datenträgerelementes abzulesen. Bei einer Wertkarte, z.B. einer Telefonkarte, eines Skipasses oder einer Fahrkarte für öffentliche Beförderungseinrichtungen, kann daher der Inhaber des erfindungsgemäßen Datenträgerelementes am Beschriftungsfeld jederzeit sein Guthaben bzw. sein verbliebenes Restguthaben ablesen und rechtzeitig sein Verhalten danach einrichten, z.B. eine neue Wertkarte erwerben.

Die erfindungsgemäße Kombination aus Lese- und Schreibvorrichtung ermöglicht die Übertragung dieser Information während der Führung des Datenträgerelementes entlang des Führungspfades, indem zunächst die Information aus dem Datenträger in Gestalt von Mikrochip und Antenne kontaktlos ausgelesen wird und unmittelbar danach auf das Beschriftungsfeld ausgedruckt wird. Somit stehen die Informationen auch dann zur Verfügung, wenn das Datenträgerelement dem Lesegerät entnommen und bis zu seiner nächsten Benutzung vom Inhaber mitgeführt wird.

Im übrigen ist die Anordnung mit Vorteil so getroffen, daß die Beschriftung im Beschriftungsfeld wiederholt löschbar ist und erneut mit den abgespeicherten Daten des Datenträgers beschreibbar ist, so daß die Beschriftung stets aktualisiert wird.

Das bei dem Datenträgerelement verwendete Beschriftungsfeld kann aus einem am Trägerteil angeordneten Etikett od.dgl. bestehen, das so ausgeführt ist, daß seine Beschriftung wiederholt gelöscht und geändert werden kann. Dabei kann das Beschriftungsfeld bzw. das es bildende Etikett so ausgeführt sein, daß es von einer speziellen Schreibeinheit, z. B. einem Drucker, elektronisch, magnetisch, chemisch oder auch thermisch beschrieben und auch wieder gelöscht werden kann. Drucker, mit denen sich Etikette u.dgl. auf diese Weise beschriften lassen, sind bekannt. Wesentlich ist hier vor allem, daß der Drucker von dem Lesegerät gesteuert wird, welches beim Einlegen des Datenträgerelementes die an ihm abgespeicherten Daten abruft, und daß diese Dateninformation dann im Beschriftungsfeld des Datenträgerelementes visuell erkennbar ausgedruckt wird.

Das Datenträgerelement erhält im übrigen zweckmäßig kleine Abmessungen, damit es vom Benutzer problemlos mitgeführt werden kann. Vorzugsweise besteht es bzw. sein Trägerteil aus einem Flachteil, insbesondere aus Kunststoff. Es kann hierbei, wie üblich, aus einer flachen Karte bestehen oder aber auch die Rundform einer Münze od.dgl. ausweisen. Andererseits kann das Datenträgerelement bei kleinen Abmessungen aber auch eine von der Flachform abweichende Gestaltung aufweisen.

Ein besonderer Vorteil der Erfindung besteht darin, daß Lesegerät und Schreibeinheit jeweils mit einem Host-Computer verbunden werden können. Somit kann die erfindungsgemäße Vorrichtung in einfacher Form angepaßt werden an unterschiedliche Datenübertragungsbelange beispielsweise an unterschiedliche auf dem Markt vorhandene Geräte. Ein weiterer Vorteil besteht darin, daß das Beschriftungsfeld wiederholt löschbar bzw. beschreibbar ist, so daß sich Wiederholungszyklen von bis zu 10.000 erreichen lassen. Somit ergibt sich eine sehr lange Gebrauchsdauer des Datenträgerelementes in Kombination mit der erfindungsgemäßen Vorrichtung.

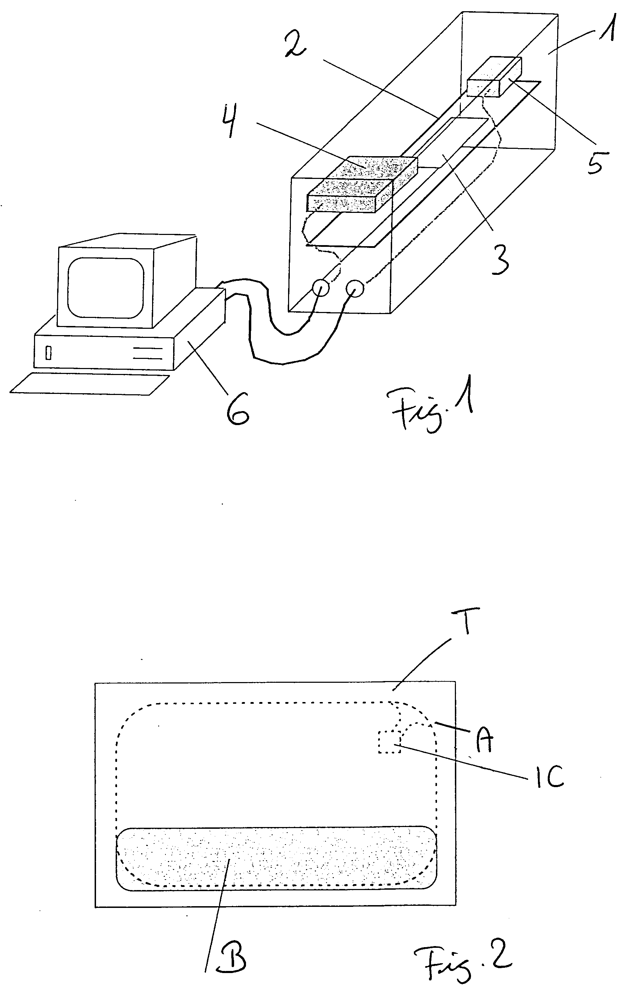

In der Zeichnung ist in Fig. 1 als ein Ausführungsbeispiel der vorliegenden Erfindung eine Lese-/Schreibvorrichtung in einer Ansicht dargestellt. Fig. 2 zeigt ein für diese Vorrichtung geeignetes Datenträgerelement 3

Innerhalb eines Gehäuses 1 befindet sich ein Führungspfad 2 für ein Datenträgerelement 3, in welchem sich das Datenträgerelement 3 beispielsweise horizontal bewegt. Während seiner Bewegung entlang des Führungspfades 2 passiert das Datenträgerelement 3 sowohl ein Lesegerät 4 als auch eine Schreibeinrichtung 5, die jeweils an der am Führungspfad 2 angeordnet sind.

Lesegerät 4 und Schreibeinrichtung 5 sind gemeinsam mit einem außerhalb des Gehäuses 1 angeordneten Host computer 6 verbunden. Das Datenträgerelement 3 ist im Detail in Fig. 2 dargestellt. Es besteht aus einem Trägerteil T in Gestalt einer dünnen rechteckigen Kunststoffkarte, die mit dem von einem Lesegerät 4 kontaktlos lesbaren und beschreibbaren Datenträger versehen ist. Dieser besteht aus einem im Kunststoffmaterial des Trägerteils T eingelassenen elektronischen Mikrochip IC mit zugeordneter Antenne A, wie dies bei kontaktlosen Karten u.dgl. bekannt und üblich ist. An der Fläche des Trägerteils T ist ein Beschriftungsfeld B vorgesehen, das mit dem im Datenträger, jeweils abgespeicherten Daten beschriftet werden kann, so daß diese Daten für den Inhaber des Datenträgerelementes 3 jederzeit im Beschriftungsfeld B ablesbar sind. Das Beschriftungsfeld B besteht vorzugsweise aus einem an der Fläche des flachen Trägerteils T angeordneten Etikett, das mit dem Trägerteil T beispielsweise durch Kleben, Nieten oder Anspritzen verbunden ist. In jedem Fall ist das Beschriftungsfeld B bzw. das es bildende Etikett so ausgebildet, daß es von der Schreibvorrichtung 5 beschriftet werden kann, wobei die Beschriftung auch wieder gelöscht und erneuert bzw. aktualisieret werden kann.

Die Beschriftung des Datenträgerelementes 3 im Beschriftungsfeld B kann mit Hilfe der Schreibvorrichtung 5 auf magnetischem, elektronischem, thermischem oder chemischem Weg erfolgen, ebenso das Löschen der Beschriftung. Wird im Gebrauch das Datenträgerelement 3 in ein Lesegerät eingeführt, welches die im Datenträger abgespeicherten Daten abruft, so werden diese Daten mit Hilfe der von dem Lesegerät 4 betätigten bzw. gesteuerten Schreibvorrichtung 5 in das Beschriftungsfeld B geschrieben, so daß diese Daten dem Karteninhaber jederzeit zur Verfügung stehen. Wird das beschriebene Datenträgerelement 3 z.B. als Skipass verwendet, dessen Erwerb eine bestimmte Anzahl an Liftfahrten ermöglicht, so wird beim Einführen des Datenträgerelementes 3 in ein Lesegerät 4 vor jeder Liftfahrt vom Lesegerät 4 die Anzahl der noch verbliebenen Liftfahrten erfaßt und im Datenträger 3 abgespeichert sowie gleichzeitig über die vom Lesegerät 4 gesteuerte Schreibvorrichtung 5 die Anzahl der noch verbliebenen Liftfahrten im Beschriftungsfeld B ausgedruckt, so daß der Inhaber des Datenträgerelementes 3 jederzeit eine Übersicht über die ihm noch mit dieser Wertkarte verbliebenen restlichen Liftfahrten hat. Gleiches gilt sinngemäß, wenn das Datenträgerelement 3 als Wertkarte für andere Zwecke, z.B. als Telefonkarte, als Fahrkarte für öffentliche Beförderungsmittel u.dgl., verwendet wird. In jedem Fall sind die vom Datenträger abgespeicherten aktuellen Daten auch visuell auf dem Datenträgerelement 3, hier auf der Karte, ersichtlich und ablesbar.

Es versteht sich, daß die Erfindung auf das vorstehend beschriebene Ausführungsbeispiel des Datenträgerelementes 3 nicht beschränkt ist und dieses auch eine von der Rechteckform abweichende Gestaltungsform aufweisen kann. Beispielsweise kann das Datenträgerelement 3 auch eine Rundform aufweisen und die Gestalt einer Münze besitzen. Mit dem aus einem Mikrochip IC als Datenspeicher und zugeordneter Antenne A bestehenden elektronischen Datenträger und dem zugeordneten Beschriftungsfeld B ergibt sich ein kontaktlos lesbares und beschreibbares Datenträgerelement 3, dessen Beschriftungsfeld B wiederholt löschbar und neu beschreibbar ist. Der von dem Mikrochip IC gebildete Datenträger arbeitet in üblicher Weise und dem Prinzip der kontaktlosen Datenübertragung. Wesentlich ist vor allem, daß die dem Datenträger jeweils eingegebenen und in diesem gespeicherten veränderlichen Daten, z.B. der jeweilige Kontostand als Beschriftung im Beschriftungsfeld B ausgedruckt werden können, wodurch sich Vorteile im Gebrauch des Datenträgerelementes 3 ergeben.

## Patentansprüche

1. Datenträgerelement, insbesondere zur Verwendung nach Art einer Wertkarte, wie Telefonkarte, Fahrkarte, Skipass u. dgl., bestehend aus einem an oder in einem Trägerteil (T) angeordneten, kontaktlos lesbaren und beschreibbaren Datenträger, welcher ein Mikrochip (IC) und eine Antenne (A) enthält,
**dadurch gekennzeichnet**, daß das Datenträgerelement (T) mit einem im Datenträger abgespeicherte Daten visuell wiedergebenden, von einem durch eine Lese-/Schreibvorrichtung (4,5) beschreibbaren und wiederholt löschbaren Beschriftungsfeld (B) versehen ist.

2. Datenträgerelement nach Anspruch 1,
**dadurch gekennzeichnet**, daß das Beschriftungsfeld (B) aus einem am oder im Trägerteil (T) angeordneten Etikett besteht.

3. Datenträgerelement nach Anspruch 1 oder 2,
**dadurch gekennzeichnet**, daß die Information auf dem Beschriftungsfeld (6) bzw. das es bildende Etikett elektronisch, magnetisch, chemisch und/oder thermisch beschreibbar und löschbar sind.

4. Datenträgerelement nach einem der Ansprüche 1 bis 3,
**dadurch gekennzeichnet,** daß das Trägerteil (T) aus einem Flachteil, vorzugsweise aus Kunststoff, besteht.

5. Datenträgerelement nach Anspruch 4,
**dadurch gekennzeichnet**, daß das Trägerteil (T) aus einer Karte besteht oder die Rundform einer Münze aufweist.

6. Lese-/Schreibvorrichtung für ein Datenträgerelement (3), bestehend aus einem Gehäuse (1) mit einem Führungspfad (2) für das Datenträgerelement (3) und einem entlang des Führungspfads (2) angeordneten Lesegerät (4) zum kontaktlosen Auslesen der abgespeicherten Information, wobei das Datenträgerelement (3) aus einem an oder in einem Trägerteil (T) angeordneten Datenträger in Gestalt eines Mikrochips (IC) und einer damit gekoppelten Antenne besteht,
**dadurch gekennzeichnet**, daß entlang des Führungspfads (2) eine mit dem Lesegerät (4) gekoppelte Schreibeinheit (5) vorgesehen ist, mittels der aus dem Datenträger ausgelesene Informationen auf einem dem Datenträgerelement (3) zugeordneten Beschriftungsfeld (B) visuell wiedergebbar sind.

7. Lese-/schreibvorrichtung nach Anspruch 6,
**dadurch gekennzeichnet,** daß Lesegerät (4) und Schreibeinheit (5) jeweils mit einem Host-Computer (6) verbunden sind.
